# EUROPEAN PATENT APPLICATION

(11) **EP 4 692 611 A1**
(43) Date of publication of application: **11.02.2026**
(21) Application number: 24787930.7
(22) Date of filing: 28.03.2024
(51) Int. Cl.: F16K 11/074, F16K 31/04, F16K 27/04

(54) **MULTI-WAY VALVE**

(30) Priority: 14.04.2023 CN 202310412135; 14.08.2023 CN 202322183466 U; 14.08.2023 CN 202322190848 U; 14.08.2023 CN 202311021442; 14.08.2023 CN 202311020824
(71) Applicant: Zhejiang Dunan Artificial Environment Co., Ltd., Shaoxing Zhejiang 311835 (CN)
(72) Inventor: XIONG, Yunjun, Shaoxing, Zhejiang 311835 (CN); YU, Zhou, Shaoxing, Zhejiang 311835 (CN); SHAO, Shican, Shaoxing, Zhejiang 311835 (CN)
(74) Representative: Hindles Limited
(86) International application number: PCT/CN2024/084572
(87) International publication number: WO 2024/212824

(57) **Abstract**

Disclosed is a multi-way valve, including: a motor assembly (10), having a driving end; a valve body (20), provided with a communication cavity (21), an inlet/outlet port (22), and a plurality of communication ports, the plurality of communication ports are annularly arranged at intervals on the valve body and are all in communication with the communication cavity, and the inlet/outlet port is in communication with the communication cavity; and a valve core (30), rotatably provided in the communication cavity, wherein a center around which the plurality of communication ports are arranged is on a rotation axis of the valve core, the valve core is provided with a flow-through channel (31), a first end of the flow-through channel being located on the rotation axis of the valve core and being in communication with the inlet/outlet port, a second end of the flow-through channel being selectively in communication with one communication port of the plurality of communication ports, the driving end is in driving connection with the valve core, wherein the motor assembly is able to drive the valve core to rotate in the communication cavity. The multi-way valve can solve the problem that pipes of an air conditioning systems in a prior art are complex and have many leakage points and low reliability.

## Description

This present invention claims the priority of Chinese Patent Application which was filed with CNIPA on 14 April 2023, has an application number 202310412135.8, and is entitled "Multi-Way Valve", the priority of Chinese Patent Application which was filed with CNIPA on 14 August 2023, has an application number 202322183466.7, and is entitled "Multi-Way Valve", the priority of Chinese Patent Application which was filed with CNIPA on 14 August 2023, has an application number 202311020824.0, and is entitled "Multi-Way Valve", the priority of Chinese Patent Application which was filed with CNIPA on 14 August 2023, has an application number 202322190848.2, and is entitled "Multi-Way Valve", and the priority of Chinese Patent Application which was filed with CNIPA on 14 August 2023, has an application number 202311021442.X, and is entitled "Multi-Way Valve".

### Technical Field

The present invention relates to the technical field of valves, and in particular to a multi-way valve.

### Background

Currently, the switching of heating and cooling modes in an air conditioning system is mainly performed by means of a four-way valve.

In a prior art, a four-way valve includes a main valve, a pilot valve, a main flow passage, and three branch flow passages, wherein the main flow passage is in communication with a high-pressure outlet of a compressor, and the three branch flow passages are in communication with a condenser, an evaporator, and a low-pressure inlet of the compressor, respectively. When an air conditioner needs to switch between a heating mode and a cooling mode, by means of a differential pressure-based driving structure, the main flow passage can be in communication with one branch flow passage of the three branch flow passages in the four-way valve, thereby implementing a reversing operation. The existing four-way valve performs driving using the differential pressure-based driving structure; however, the differential pressure in a valve cavity is liable to change, such that a valve core is prone to being affected by the differential pressure to rotate, and thus the valve core cannot be kept at a fixed position. Thus, at present, a plurality of single-way solenoid valves are used in a new energy vehicle to implement pipe switching, so as to implement switching between cooling, heating, defrosting, and demisting/dehumidifying functions of an air conditioning system, which results in complex pipes of the air conditioning system.

### Summary

Some embodiments of the present invention provide a multi-way valve, so as to solve a problem that the pipes of the air conditioning systems in a prior art are complex and have many leakage points and low reliability.

Some embodiments of the present invention provide a multi-way valve, including: a motor assembly, having a driving end; a valve body, provided with a communication cavity, a plurality of communication ports, and an inlet/outlet port, the plurality of communication ports are annularly arranged at intervals on the valve body and are all in communication with the communication cavity, and the inlet/outlet port is in communication with the communication cavity; and a valve core, rotatably provided in the communication cavity, wherein a center around which the plurality of communication ports are arranged is on a rotation axis of the valve core, the valve core is provided with a flow-through channel, a first end of the flow-through channel being located on the rotation axis of the valve core and being in communication with the inlet/outlet port, a second end of the flow-through channel being selectively in communication with one communication port of the the plurality of communication ports, the driving end is in driving connection with the valve core, wherein the motor assembly is able to drive the valve core to rotate in the communication cavity.

By applying the technical solution of the present invention, the multi-way valve includes the motor assembly, the valve body, and the valve core. The valve body is provided with the communication cavity, the plurality of communication ports, and the inlet/outlet port; the valve core is rotatably arranged in the communication cavity, and the motor assembly is in driving connection with the valve core; the valve core is provided with the flow-through channel fitted to a communication hole; and the valve core is fitted to and in communication with different one communication port of the plurality of communication ports by means of rotation, so as to realize the switching of flow passages. A provision of the motor assembly can realize zero differential pressure starting, and during operation, the valve core is not driven to rotate due to a change in differential pressure; thus, the multi-way valve can be used to replace a plurality of single-way solenoid valves, so that multi-mode switching in an air conditioning system can be realized by means of the multi-way valve. This solution provides a simple result, allows for easy installation, and requires for fewer structural components, thereby reducing the number of valve bodies and pipes provided, facilitating installation, detachment, and maintenance by workers.

Further, the multi-way valve further includes a sealing assembly which is provided between the second end of the flow-through channel and the valve body and can form sealing between the second end of the flow-through channel and one corresponding communication port of the plurality of communication ports. By means of this design, a gap formed between the flow-through channel and one corresponding communication port of the plurality of communication ports can be avoided, which would otherwise cause leakage of refrigerant fluid.

Further, the plurality of communication ports are coplanar, an end face of the valve core where the second end of the flow-through channel is located is arranged corresponding to a surface where the plurality of communication ports are located; and the sealing assembly includes: a slider, movably provided on the valve core, wherein the slider is located at the second end of the flow-through channel and is provided with a flow-through hole, one end of the flow-through hole being in communication with the second end of the flow-through channel, and the other end of the flow-through hole abutting against the surface where the plurality of communication ports are located, and the plurality of communication ports are in communication with the flow-through channel via the flow-through hole. By means of this design, one corresponding communication port of the plurality of communication ports can be closely fitted with the flow-through hole, improving a sealing performance, and preventing leakage of refrigerant fluid.

Further, the flow-through channel is used to circulate low-pressure refrigerant and the communication cavity is used to circulate high-pressure refrigerant, a mounting boss is provided on the end face of the valve core where the second end of the flow-through channel is located, the mounting boss surrounds a periphery of the second end of the flow-through channel, the slider is sleeved on a periphery of the mounting boss, and the slider can move in an axial direction of the mounting boss. By means of this design, when an inside of the valve core is a flow path of low-temperature low-pressure fluid and the communication cavity is a flow path of high-temperature high-pressure fluid, the slider can be closely fitted with the mounting boss under an effect of differential pressure, ensuring an sealing effect of the slider.

Further, the multi-way valve further includes a first sealing ring which is sleeved on the mounting boss and is located between the slider and the mounting boss. By means of this configuration, the first sealing ring can block a gap between the slider and the mounting boss, improving a sealing performance of the multi-way valve.

Further, a first sealing ring groove is provided on an inner wall of the slider, the first sealing ring groove is located at an end of the slider away from the plurality of communication ports, and the first sealing ring is located in the first sealing ring groove. By means of this configuration, leakage in the multi-way valve can be prevented, further improving the sealing performance of the multi-way valve.

Further, the flow-through channel is used to circulate high-pressure refrigerant and the communication cavity is used to circulate low-pressure refrigerant, the end face of the valve core where the second end of the flow-through channel is located is provided with a mounting recess, the mounting recess is in communication with the second end of the flow-through channel, a part of the slider is located in the mounting recess, and the slider can move in an axial direction of the mounting recess. By means of this design, when the inside of the valve core is a flow path of high-temperature high-pressure fluid, and the communication cavity is a flow path of low-temperature low-pressure fluid, the slider can be closely fitted with the mounting boss under the effect of differential pressure, ensuring the sealing effect of the slider.

Further, a distance between the slider and a bottom of the mounting recess is greater than or equal to 0.1 mm. By means of this configuration, high-temperature refrigerant fluid can flow through the bottom of the slider when passing through the slider, and applies an upward acting force to the slider, so as to further ensure that a top of the slider is fitted with the surface where the plurality of communication ports are located, avoiding leakage of refrigerant fluid.

Further, the multi-way valve further includes a second sealing ring which is sleeved on the slider and is located between the slider and a second mounting recess. By means of this configuration, leakage of refrigerant fluid from between the slider and the valve core is prevented, thereby improving a stability of an internal flow path of the multi-way valve.

Further, an outer wall of the slider is provided with a second sealing ring groove, the second sealing ring is located in the second sealing ring groove, an inner ring of the second sealing ring is matched with a lateral wall of the second sealing ring groove for sealing, and an outer ring of the second sealing ring is matched with an inner wall of the mounting recess for sealing. By means of this configuration, the slider and the valve core can be closely fitted by means of the second sealing ring by means of the pressure of a refrigerant, preventing leakage of refrigerant fluid from between the slider and the valve core, further improving the sealing performance of a sealing ring.

Further, an end face of the slider close to the plurality of communication ports is provided with an annular boss, and the annular boss surrounds a periphery of the flow-through hole and abuts against a surface where the plurality of communication ports are located. By means of this design, a contact area between the slider and the surface where the plurality of communication ports are located can be reduced, and under the effect of differential pressure, the sealing effect of the slider is improved.

Further, an area of an end face of the annular boss that faces the plurality of communication ports is S2, and an area of an end face of the slider that is located outside the annular boss and faces the plurality of communication ports is S1, wherein 1≤S1/S2≤6. By means of this configuration, wear of the slider can be reduced while internal leakage of a refrigerant is prevented, prolonging a service life of the slider.

An end face of the slider close to the plurality of communication ports is provided with an annular boss, and the annular boss surrounds a periphery of the flow-through hole and abuts against a surface where the plurality of communication ports are located; a difference between an area surrounded by an outer contour of the annular boss and an area surrounded by an inner contour of the flow-through hole is S6, and a difference between the area surrounded by the outer contour of the annular boss and an area surrounded by an inner contour of the annular boss is S7, wherein 1≤S6/S7≤6.

Further, a port of the annular boss is a strip-shaped port, and the strip-shaped port is arc-shaped, and a center of a circle of the strip-shaped port and the rotation axis of the valve core are located on a same side of the strip-shaped port. By means of this configuration, a torque arm of rotation when the valve core rotates to switch flow passages is shorter, thereby reducing a load torque when the valve core rotates to perform switching, thereby realizing a fast switching function.

Further, a contour of each of the plurality of communication ports matches a contour of the strip-shaped port, and a circumferential contour of a lateral wall of the slider matches the contour of the strip-shaped port. By means of this configuration, a stability of movement of the slider in the mounting recess can be further improved, further improving the sealing performance of the slider.

Further, a port at the second end of the flow-through channel is a strip-shaped port, the strip-shaped port is arc-shaped, a center of a circle of the strip-shaped port and the rotation axis of the valve core are located on a same side of the strip-shaped port, a distance between two ends of the strip-shaped port in a circumferential direction is greater than a minimum distance between two adjacent communication ports of the plurality of communication ports in a circumferential direction. By means of this design, a torque arm of rotation when the valve core rotates to switch flow passages is shorter, thereby reducing a load torque when the valve core rotates to perform switching, thereby realizing a fast switching function; the strip-shaped port is closer to the rotation axis of the valve core, thereby being beneficial to saving space, realizing miniaturization of the multi-way valve, and making a layout of a whole pipes of an air conditioning system more rational.

Further, the communication cavity has a top surface and a bottom surface arranged opposite each other, the plurality of communication ports are located on the top surface, the inlet/outlet port is located on the bottom surface, a flow guide inclined surface is provided on a lateral wall of the valve core and is configured to face the plurality of communication ports, and a distance between the flow guide inclined surface and an axis of the valve core gradually increases in a direction from the plurality of communication ports to the inlet/outlet port. By means of this design, the flow resistance of refrigerant fluid in the communication cavity can be reduced, so that the pressure loss is smaller, increasing a flow velocity of refrigerant fluid in the communication cavity.

Further, the valve core has a first end and a second end arranged opposite each other along an axis, a first bearing is provided between the first end of the valve core and the valve body, and a second bearing is provided between the second end of the valve core and the valve body. By means of this design, a friction load between the valve core and the valve body can be reduced, reducing an action torque during switching, realizing a fast reversing function of the multi-way valve under high differential pressure.

Further, a first shaft shoulder and a second shaft shoulder are provided on the valve core, and both the first bearing and the second bearing are sleeved on the valve core; the first shaft shoulder is fitted to an end face of an inner ring of the first bearing for position limiting, the second shaft shoulder is fitted to an end face of an inner ring of the second bearing for position limiting, and both an outer ring of the first bearing and an outer ring of the second bearing are fitted to the valve body to for position limiting; there is a first clearance L1 in the axial direction between the first shaft shoulder and the first bearing, and there is a second clearance L2 in the axial direction between the slider and an end face of the valve core facing the plurality of communication ports, wherein L1<L2.

Further, the first end of the flow-through channel is provided on an end face of the second end of the valve core, the second end of the valve core passes into the inlet/outlet port, a second sealing gasket is provided between the second end of the valve core and a lateral wall of the inlet/outlet port, and the second sealing gasket is located on a side of the second bearing away from the plurality of communication ports. By means of this design, thermal expansion of the second bearing and volatilization of lubricating oil inside the second bearing can be avoided, prolonging the service life of the second bearing.

Further, an inner wall of the inlet/outlet port is provided with a second annular limiting groove, and the second sealing gasket is sleeved on the second end of the valve core and is located in the second annular limiting groove. By means of this configuration, pre-tightening force can be applied to the second sealing gasket to cause the sealing gasket to deform in the annular limiting groove, further improving a sealing performance of the second sealing gasket.

Further, the valve core has a first end and a second end arranged opposite each other along an axis, the first end of the flow-through channel is arranged on an end face of the second end of the valve core, the second end of the valve core passes into the inlet/outlet port, and a second sealing gasket is provided between the second end of the valve core and a lateral wall of the inlet/outlet port; the multi-way valve further includes a sealing ring which is located between the slider and the valve core; a sealing area of the second sealing gasket is S3, a sealing area of the sealing ring is S4; when a low-pressure refrigerant flows in the flow-through channel and a high-pressure refrigerant flows in the communication cavity, S3≥S4; and when a high-pressure refrigerant flows in the flow-through channel and a low-pressure refrigerant flows in the communication cavity, S3≤S4. By means of this configuration, a force applied to the valve core in a direction towards a valve seat can be smaller than a force applied to the valve core in a direction towards the inlet/outlet port, so that the valve core abuts against the second bearing as far as possible, reducing the torque applied to the valve core, and improving a smooth rotation of the valve core.

Further, a first sealing gasket is provided between the first end of the valve core and the valve body, a mounting hole is provided on the valve body, the mounting hole is located at an end of the valve body where the plurality of communication ports are located, one end of the mounting hole is in communication with the communication cavity, the other end of the mounting hole is in communication with an outside, and the first sealing gasket is located in the mounting hole. The provision of the first sealing gasket can further improve the sealing performance of the valve core against the outside.

Further, a first annular limiting groove is provided on a lateral wall of the first end of the valve core and is arranged away from the driving end, the first sealing gasket is located in the first annular limiting groove, an outer wall of the first sealing gasket is matched with an inner wall of the mounting hole for sealing, and an inner wall of the first sealing gasket is matched with a radially arranged groove bottom of the first annular limiting groove for sealing. By means of this configuration, a structure is simple, facilitating installation, detachment, and maintenance of the valve core and change of the first sealing gasket, and reducing an efficiency of heat transfer along the valve core to the driving end.

Further, the multi-way valve further includes a second sealing ring which is located between the slider and the valve core, a sealing area of the second sealing ring is S4, a sealing area of the second sealing gasket is S3, and a sealing area of the first sealing gasket is S5; and when a low-pressure refrigerant flows in the flow-through channel and a high-pressure refrigerant flows in the communication cavity, S3≥S4+S5. By means of this configuration, the force applied to the valve core in the direction towards the valve seat can be smaller than the force applied to the valve core in the direction towards the inlet/outlet port, so that the valve core abuts against the second bearing as far as possible, reducing the torque applied to the valve core, and improving the smooth rotation of the valve core.

Further, the motor assembly is provided with a balancing cavity, the valve core is provided with a balancing channel, one end of the balancing channel is in communication with the flow-through channel, and the other end of the balancing channel is in communication with the balancing cavity. By means of this design, when low-temperature low-pressure refrigerant fluid flows in the valve core, the low-temperature low-pressure refrigerant fluid from the valve core can enter the motor assembly to cool the motor assembly, reducing magnetic loss of the motor assembly, and prolonging the service life of the motor assembly.

Further, the valve body is provided with a mounting hole which is located at an end of the valve body where the plurality of communication ports are located, one end of the mounting hole is in communication with the communication cavity, the other end of the mounting hole is in communication with an outside, the valve core has a first end and a second end arranged opposite each other along an axis, both the first end of the valve core and the driving end pass into the mounting hole, and the balancing channel passes through the first end of the valve core and is in communication with the balancing cavity.

Further, a limiting structure is provided between the valve body and the valve core, and the limiting structure can limit a rotation angle of the valve core. By means of this configuration, an installation of the valve core and the driving end can be facilitated by using the mounting hole.

Further, the multi-way valve includes a first communication port, a second communication port, and a third communication port which are sequentially provided; the limiting structure includes limiting posts arranged on two sides of the third communication port, the limiting posts cooperate with the valve core to limit a rotation of the valve core between the first communication port and the second communication port; the flow-through hole is in communication with one of the first communication port and the second communication port, and the third communication port is in communication with the other of the first communication port and the second communication port via the communication cavity. By means of this configuration, the limiting posts cooperate with the valve core to limit the rotation of the valve core between the first communication port and the second communication port, thereby realizing switching between the first communication port and the second communication port.

Further, the motor assembly includes: a housing, provided with a balancing cavity; a driving motor, provided in the balancing cavity; a speed reducer, provided in the balancing cavity, the driving motor being in drive connection with an input end of the speed reducer; and a connecting shaft, one end of the connecting shaft being in drive connection with an output end of the speed reducer, the other end of the connecting shaft being in drive connection with a first end of the valve core, and the balancing cavity passing through the connecting shaft and being in communication with the balancing channel. By means of this configuration, a rotor component is connected to the connecting shaft via the speed reducer, increasing a torque of a rotor component, making the valve core rotate more smoothly, thereby increasing a cooling and heating mode switching efficiency of the multi-way valve.

Further, the valve body includes a valve seat and an end cover, the plurality of communication ports are annularly arranged at intervals on a flat surface of the valve seat facing the valve core, the inlet/outlet port is provided at an end of the end cover away from the valve core, the valve seat is detachably connected to the end cover, and the valve seat and the end cover are fitted to form the communication cavity. By means of this configuration, installation, detachment, and maintenance of the valve core can be facilitated.

Further, the multi-way valve further includes an elastic member which is arranged between the slider and the valve core, the elastic member being capable of providing elastic force to cause the slider and the valve core to draw away from each other. By means of this configuration, the elastic member arranged between the slider and the valve core can ensure that in a presence of elastic acting force the end face of the slider is closely fitted with the surface where the plurality of communication ports are located, further ensuring the sealing effect of the slider, and reducing leakage of fluid inside the multi-way valve.

### Brief Description of the Drawings

The drawings constituting a part of the invention are intended to provide better understanding of the present invention, and the schematic embodiments of the present invention and the description thereof are used to explain the present invention, but not to limit the present invention improperly. In the drawings:
Fig. 1 is a sectional view of a multi-way valve according to embodiment 1 of the present invention;
Fig. 2 is an exploded view of the multi-way valve according to embodiment 1 of the present invention;
Fig. 3 is a partially enlarged view of A in Fig. 1;
Fig. 4 is a sectional view of the flat surface of the valve body in Fig. 1 where communication ports are located;
Fig. 5 is a structural schematic diagram of the slider in Fig. 1;
Fig. 6 is a structural schematic diagram of the valve core in Fig. 1;
Fig. 7 is a perspective view of the valve core in Fig. 1;
Fig. 8 is a perspective view of fitting between the valve core and the valve seat in Fig. 1;
Fig. 9 is a partially enlarged view of B in Fig. 1;
Fig. 10 is a state diagram of the valve core being in communication with one of the plurality of communication ports;
Fig. 11 is a schematic diagram of the multi-way valve according to embodiment 1 during switching;
Fig. 12 is a state diagram of the valve core rotating to a position between two adjacent communication port of the plurality of communication ports;
Fig. 13 is a schematic diagram of the multi-way valve according to embodiment 1 after switching;
Fig. 14 shows a state diagram of the valve core rotating to be in communication with another communication port;
Fig. 15 is a sectional view of a multi-way valve according to embodiment 2 of the present invention;
Fig. 16 is a structural schematic diagram of the valve core in Fig. 15;
Fig. 17 is a partially enlarged view of C in Fig. 15;
Fig. 18 is a structural schematic diagram of the slider in Fig. 15.

The drawings contain the following reference signs:
10. motor assembly; 11. driving motor; 12. speed reducer; 13. balancing cavity; 20. valve body; 21. communication cavity; 22. inlet/outlet port; 23. communication port; 23a. first communication port; 23b. second communication port; 23c. third communication port; 24. limiting post; 25. first sealing gasket; 26. mounting hole; 201. valve seat; 202. end cover; 30. valve core; 30a. flow guide inclined surface; 31. flow-through channel; 32. mounting boss; 33. mounting recess; 34. first bearing; 35. second bearing; 36. second sealing gasket; 37. balancing channel; 38. first shaft shoulder; 39. second shaft shoulder; 41. slider; 41a. flow-through hole; 42. elastic member; 43a. first sealing ring; 43b. second sealing ring; 411. annular boss; 412a. first sealing ring groove; 412b. second sealing ring groove.

### Detailed Description of the Embodiments

The technical solutions in the embodiments of the present invention will be described clearly and completely with reference to the drawings in the embodiments of the present invention. Apparently, the described embodiments are merely some rather than all of the embodiments of the present invention. The following description of at least one exemplary embodiment is merely illustrative in nature and is in no way intended to limit the present invention and any invention or use thereof. All other embodiments obtained by a person skilled in the art on the basis of the embodiments of the present invention without creative efforts shall belong to the scope of protection of the present invention.

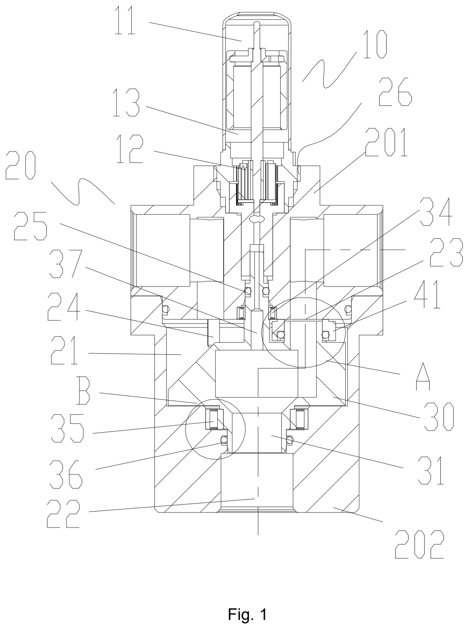

As shown in figures 1, 2, and 13, the embodiments of the present invention provide a multi-way valve, including a motor assembly 10, a valve body 20, and a valve core 30. The motor assembly 10 has a driving end. The valve body 20 is provided with a communication cavity 21, an inlet/outlet port 22, and a plurality of communication ports 23, the plurality of communication ports 23 are annularly arranged at intervals on the valve body 20, and are all in communication with the communication cavity 21, and the inlet/outlet port 22 are in communication with the communication cavity 21. The valve core 30 is rotatably arranged in the communication cavity 21; a center around which the plurality of communication ports 23 are arranged is on the rotation axis of the valve core 30; the valve core 30 is provided with a flow-through channel 31, a first end of the flow-through channel 31 being located on the rotation axis of the valve core 30 and being in communication with the inlet/outlet port 22, and a second end of the flow-through channel 31 being selectively in communication with at least one communication port of the plurality of communication ports 23; the driving end is in driving connection with the valve core 30; and the motor assembly 10 is able to drive the valve core 30 to rotate in the communication cavity 21. The valve core 30 is driven by the motor assembly 10 to rotate, such that the second end of the flow-through channel 31 can be in communication with at least one of the plurality of communication ports 23; and when pipes need to be switched, it is only necessary to rotate the valve core 30 to allow communication between the second end of the flow-through channel 31 and a corresponding communication port of the plurality of communication ports 23.

By means of the technical solution of the present invention, the multi-way valve includes the motor assembly 10, the valve body 20, and the valve core 30. The provision of the motor assembly 10 can realize zero differential pressure starting, and during operation, the valve core 30 is not driven to rotate due to a change in differential pressure; thus, the multi-way valve can be used to replace a plurality of single-way solenoid valves, so that multi-mode switching in an air conditioning system can be realized by means of the multi-way valve. This solution provides a simple result, allows for easy installation, and requires for fewer structural components, thereby reducing the number of valve bodies and pipes provided, facilitating installation, detachment, and maintenance by workers. Compared with the solution of providing a plurality of solenoid valves for control in the prior art, the present invention greatly reduces the number of valve bodies and pipes, and simplifies the control of pipes.

The driving end of the motor assembly 10 includes a driving motor 11 and a speed reducer 12; the driving motor 11 is connected to an input end of the speed reducer 12; an output end of the speed reducer 12 is in driving connection with the valve core 30; and the driving motor 11 drives, by means of the speed reducer 12, the valve core 30 to rotate in the communication cavity 21. The provision of the speed reducer 12 can increase a torque of the driving motor 11, so that a switching of flow paths can be performed more smoothly. The provision of the motor assembly 10 can realize zero differential pressure starting, and an interior of the motor assembly 10 generally has a self-locking structure, such that in a case of a power failure, the multi-way valve can still ensure that a position of the valve core 30 does not change even if the differential pressure changes. In some embodiments, self-locking structures may be provided in the driving motor 11 and the speed reducer 12; and if a power failure occurs when the valve core 30 shifts in place, the valve core 30 keeps in this place, realizing a self-locking function. The technical solution of the present invention can improve system integrity, reduce a number of pipes of an air conditioning system, and improve a reliability of an overall system. In some embodiments, a self-locking structure is provided on a rotor of the driving motor 11, and a self-locking structure is provided on a gear assembly of the speed reducer 12, so that a self-locking function of the motor assembly 10 can be realized.

The plurality of communication ports 23 can be annularly arranged on a lateral wall of the communication cavity 21, and can also be annularly arranged on a top of the communication cavity 21; and the inlet/outlet port 22 can be provided at a top or bottom of the communication cavity 21.

As shown in Fig. 1, Fig. 2, Fig. 6, and Fig. 7, in some embodiments of the present invention, the communication cavity 21 has a top surface and a bottom surface arranged opposite each other, the plurality of communication ports 23 are located on the top surface, and the inlet/outlet port 22 is located on the bottom surface; a flow guide inclined surface 30a is arranged on a lateral wall of the valve core 30, and is configured to face the plurality of communication ports 23; and a distance between the flow guide inclined surface 30a and an axis of the valve core 30 gradually increases in a direction from the plurality of communication ports 23 to the inlet/outlet port 22. According to the described configuration, at a same flow rate, the provision of the flow guide inclined surface 30a can reduce a flow resistance, so that a pressure loss is smaller and a flow velocity is greater; and a flow guide channel can also be provided on the flow guide inclined surface 30a, further reducing the flow resistance and increasing the flow velocity of refrigerant fluid in the communication cavity 21. An included angle between the flow guide inclined surface 30a and the axis of the valve core 30 ranges from 35° to 55°. **In** some embodiments, an included angle can be 35°, 45°, 50°, or 55°.

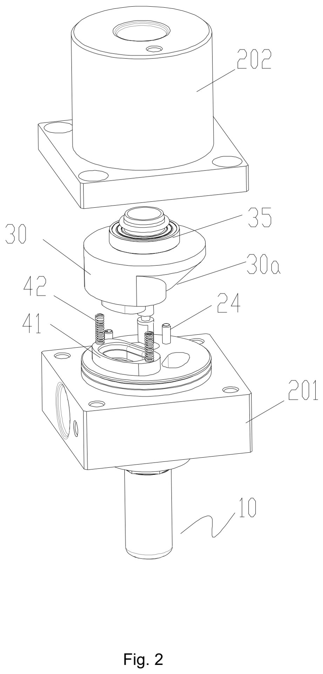

As shown in Fig. 2, in some embodiments of the present invention, the valve body 20 includes a valve seat 201 and an end cover 202; the plurality of communication ports 23 are annularly arranged at intervals on a flat surface of the valve seat 201 facing the valve core 30; the inlet/outlet port 22 is provided at an end of the end cover 202 away from the valve core 30; the valve seat 201 is detachably connected to the end cover 202; the valve seat 201 and the end cover 202 are fitted to form the communication cavity 21; and the valve core 30 is provided in the communication cavity 21 formed by fitting the end cover 202 to the valve seat 201. The valve seat 201 and the end cover 202 can be connected and fastened by means of fasteners; in some embodiments, end faces of the valve seat 201 and the end cover 202 are provided with a plurality of connecting through holes which are annularly arranged at intervals, and the fasteners pass into the plurality of connecting through holes on the valve seat 201 and the end cover 202 corresponding to each other, so as to connect and fasten the valve seat 201 and the end cover 202, which facilitates installation and maintenance of the valve core 30.

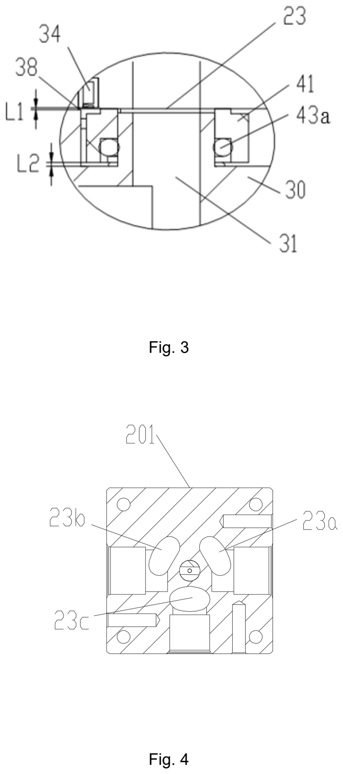

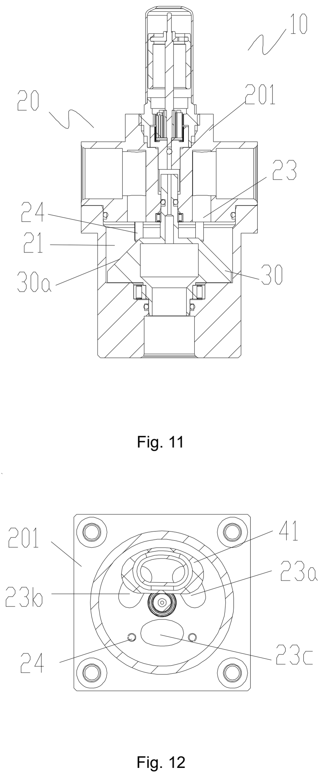

As shown in Fig. 3 and Fig. 11, in some embodiments of the present invention, the multi-way valve further includes a sealing assembly which is arranged between the second end of the flow-through channel 31 and the valve body 20 and can form sealing between the second end of the flow-through channel 31 and a corresponding communication port of the plurality of communication ports 23. By means of this design, the sealing assembly can prevent a gap from being formed between the second end of the flow-through channel 31 and the valve body 20, so that the second end of the flow-through channel 31 is in close communication with a corresponding communication port of the plurality of communication ports 23, thereby being beneficial to reducing fluid leakage inside the multi-way valve.

As shown in Fig. 2 to Fig. 4, in some embodiments of the present invention, the plurality of communication ports 23 on the valve seat 201 are coplanar, and in some embodiments of the present invention, the plurality of communication ports 23 are arranged on the end face of the valve seat 201 facing the end cover 202. The end face of the valve core 30 where the second end of the flow-through channel 31 is located is arranged corresponding to the surface where the plurality of communication ports 23 are located; and the sealing assembly includes a slider 41. The slider 41 is movably arranged on the valve core 30; the slider 41 is located at the second end of the flow-through channel 31, and is provided with a flow-through hole 41a; one end of the flow-through hole 41a is in communication with the second end of the flow-through channel 31, and the other end of the flow-through hole 41a abuts against the surface where the plurality of communication ports 23 are located; and the communication ports 23 are in communication with the flow-through channel 31 via the flow-through hole 41a. In some embodiments, other structures may be used to assist in applying force to the slider 41 so as to cause the slider 41 to abut against the surface of the valve seat 201 where the plurality of communication ports 23 are located; and the slider 41 may also be driven, by a high-pressure refrigerant in the communication cavity 21 or in the flow-through channel 31, to abut against the surface of the valve seat 201 where the communication ports 23 are located.

In some embodiments, an elastic member 42 is further provided; the elastic member 42 is arranged between the slider 41 and the valve core 30; and the elastic member 42 provides elastic force to the valve core 30 so as to cause the slider 41 to be in contact with the surface where the plurality of communication ports 23 are located. The provision of the elastic member 42 further ensures that the slider 41 abuts against the surface of the valve seat 201, ensuring the sealing effect of the slider 41.

By means of this design, the elastic member 42 arranged between the slider 41 and the valve core 30 can ensure that in a presence of elastic acting force, the end face of the slider 41 is closely fitted with the surface where the plurality of communication ports 23 are located, thereby reducing fluid leakage inside the multi-way valve; and when the slider 41 has friction loss during rotation with the valve core 30, the elastic member 42 can also compensate the slider 41, ensuring a performance of sealing between the slider 41 and the surface where the plurality of communication ports 23 are located. Furthermore, the elastic member 42 can also ensure that the slider 41 does not shake during transport of refrigerant fluid, thereby reducing the noise generated when the multi-way valve is working.

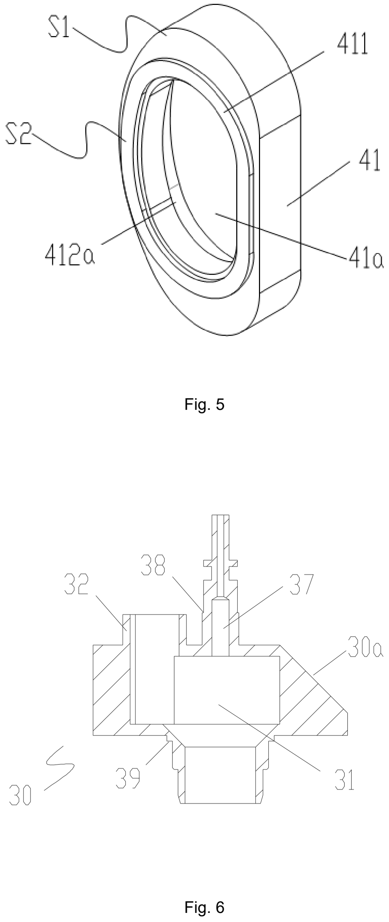

As shown in Fig. 3 and Fig. 5, in some embodiments of the present invention, a sealing ring may also be provided between the slider 41 and the valve core 30, and a sealing ring groove is provided on the slider 41 for the installation and fixing of the sealing ring, preventing displacement of the sealing ring that would otherwise cause the sealing effect to be lost. By means of this design, a performance of sealing at a position where the slider 41 is fitted with the valve core 30 can be improved, improving the overall stability of the multi-way valve.

As shown in Fig. 1 to Fig. 6, in some embodiments of the present invention, when a low-temperature low-pressure refrigerant is introduced into the flow-through channel 31 and a high-temperature high-pressure refrigerant is introduced into the communication cavity 21, a mounting boss 32 is provided on the end face of the valve core 30 where the second end of the flow-through channel 31 is located, the mounting boss 32 surrounds a periphery of the second end of the flow-through channel 31, and the slider 41 is sleeved on a periphery of the mounting boss 32. In this way, the high-temperature high-pressure refrigerant outside the valve core 30 can drive the slider 41 installed outside the mounting boss 32 to move towards the valve seat 201 side, so as to cause the slider 41 to abut against and seal the surface where the plurality of communication ports 23 are located. Furthermore, the mounting boss 32 can also restrict a movement trajectory of the slider 41, preventing deviation of the slider 41 during rotation of the valve core 30 that would otherwise cause failure of sealing, further improving stability of the system.

In some embodiments, the multi-way valve further includes a first sealing ring 43a; and in the first embodiment of the present invention, the first sealing ring 43a is sleeved on the mounting boss 32 and is located between the slider 41 and the mounting boss 32. The slider 41 driven by differential pressure would move along the mounting boss 32, thus a certain gap would form between the slider 41 and the mounting boss 32. By means of this configuration, the first sealing ring 43a can block the gap between the slider 41 and the mounting boss 32, thereby improving the sealing performance of the multi-way valve.

Referring to Fig. 3 and Fig. 5, a first sealing ring groove 412a is provided on an inner wall of the slider 41, and is located at an end of the slider 41 away from the plurality of communication ports 23; and the first sealing ring 43a is provided between the slider 41 and the valve core 30, and is located in the first sealing ring groove 412a to provide sealing between the slider 41 and the valve core 30. An outer ring of the first sealing ring 43a is fitted with an inner wall of the first sealing ring groove 412a, and an inner ring of the first sealing ring 43a is fitted with an outer wall of the mounting boss 32. By means of this design, the performance of sealing at a position where the slider 41 is fitted with the valve core 30 is improved, improving the overall stability of the multi-way valve. The slider 41 can move in an axial direction of the mounting boss 32, and works in conjunction with the elastic member 42, such that the slider 41 abuts against the surface of the valve seat 201 where the plurality of communication ports 23 are located.

As shown in Fig. 3 and Fig. 5, in some embodiments of the present invention, an end face of the slider 41 close to the plurality of communication ports 23 is provided with an annular boss 411 which surrounds a periphery of the flow-through hole 41a and abuts against the surface where the plurality of communication ports 23 are located. By designing the annular boss 411, a contact area between the slider 41 and the surface where the plurality of communication ports 23 are located can be reduced. With the effect of differential pressure and the elastic force provided by the elastic member 42, the sealing effect can be improved, and after the contact area becomes smaller, the friction resistance experienced by the valve core 30 when shifting can also be correspondingly reduced, thereby reducing wear of the slider 41, prolonging the service life of the slider 41.

**In** some embodiments, an area of an end face of the annular boss 411 that faces the plurality of communication ports 23 is S2, and an area of an end face of the slider 41 that is located outside the annular boss 411 and faces the communication ports 23 is S1; when a high-pressure refrigerant flows in the flow-through channel 31 and a low-pressure refrigerant flows in the communication cavity 21, 1≤S1/S2≤6; if the ratio is less than 1, the area of the end face of the annular boss 411 is too large, increasing the friction resistance experienced by the valve core 30 when shifting; and if the ratio is greater than 6, excessive pressure is applied to the annular boss 411, which may cause serious wear of the slider 41, thereby causing leakage of a refrigerant, and affecting overall stability. Thus, in some embodiments of the present invention, the range of the ratio of the two is set between 1 and 6. **In** some embodiments, the S1/S2 ratio may specifically be 1, 2, 4, or 6.

In some embodiments, a difference between an area surrounded by an outer contour of the annular boss 411 and an area surrounded by an inner contour of the flow-through hole 41a is S6, and a difference between the area surrounded by the outer contour of the annular boss 411 and an area surrounded by the inner contour of the annular boss 411 is S7, wherein when a low-pressure refrigerant flows in the flow-through channel 31 and a high-pressure refrigerant flows in the communication cavity 21, 1≤S6/S7≤6. If the ratio is smaller than 1, a flow-through area of the flow-through hole 41a is reduced, which affects a flow-through speed of refrigerant fluid in the flow-through channel 31, increases the friction of the annular boss 411 against the valve seat 201, and increases a torque that needs to be overcome when the valve core 30 rotates; and if the ratio is greater than 6, the sealing area of the annular boss 411 relative to the plurality of communication ports 23 is reduced, and the sealing effect of the annular boss 411 is reduced. In some embodiments, the ratio of S6/S7 can be 1, 2, 4, or 6. In an embodiment of the present invention, the inner contour of the annular boss 411 is same as the inner contour of the flow-through hole 41a, and in this case, S1/S2=1. Such setting can ensure the sealing effect while facilitating a processing and forming of the annular boss 411 and reducing a production cost.

A flat surface of the valve body 20 where the plurality of communication ports 23 are located can be ground by means of a grinding process, so as to meet the requirements, when the valve core 30 shifts, for smoothness of the annular boss 411 and the flat surface where the plurality of communication ports 23 are located, reducing the influence of the friction resistance, and making the annular boss 411 be more closely fitted to the flat surface where the plurality of communication ports 23 are located, reducing the risk of leakage.

Further, a port of the annular boss 411 is a strip-shaped port, and the strip-shaped port is arc-shaped, and a center of a circle of the strip-shaped port and the rotation axis of the valve core 30 are located on a same side of the strip-shaped port. By configuring the port of the annular boss 411 to be a strip-shaped port, compared with a flow passage of which the port is circular, with the equal cross-sectional area of the flow passage, the second end of the flow-through channel 31 can be closer to the rotation axis of the valve core 30, so that a torque arm of rotation when the valve core 30 rotates to switch flow passages is shorter, thereby reducing a load torque when the valve core 30 rotates to perform switching, thereby realizing a fast switching function. The strip-shaped port is configured to be arc-shaped, and the center of the circle of the strip-shaped port and the rotation axis of the valve core 30 are located on the same side of the strip-shaped port, so that the strip-shaped port is closer to the rotation axis of the valve core 30, thereby being beneficial to saving space, realizing miniaturization of the multi-way valve, and making the layout of the whole pipes of an air conditioning system more rational.

In some embodiments, a contour of a communication port 23 matches a contour of the strip-shaped port, which can further improve the smooth flow of fluid. Furthermore, the circumferential contour of the lateral wall of the slider 41 is configured to match the contour of the strip-shaped port, further improving a stability of a movement of the slider 41 in the mounting boss 32, reducing a probability of refrigerant leakage at a position where the mounting boss 32 is matched with the slider 41, and further improving the sealing performance of the slider 41.

Moreover, in some embodiments of the present invention, a distance between two ends of the strip-shaped port in a circumferential direction is greater than a minimum distance between two adjacent communication ports 23 of the plurality of communication ports 23 in a circumferential direction; this configuration can ensure that the second end of the flow-through channel 31 can be in communication with the at least one communication port 23 during rotation and shifting of the valve core 30, which can avoid sudden increase or decrease of a system pressure during switching which would otherwise cause shut down of the system due to false determination.

A port of the second end of the flow-through channel 31 can be a circular port, and can also be a specially-shaped hole such as a kidney-shaped port and a polygonal port. In some embodiments of the present invention, the port of the second end of the flow-through channel 31 is a strip-shaped port, wherein the strip-shaped port is an opening structure having a certain length, and for example, can be an oval port, a rectangular port, and a sector-shaped port. By means of this configuration, compared with a flow passage of which the port is circular, with the equal cross-sectional area of the flow passage, the second end of the flow-through channel 31 can be closer to the rotation axis of the valve core 30, so that a torque arm of rotation when the valve core 30 rotates to switch flow passages is shorter, thereby reducing a load torque when the valve core 30 rotates to perform switching, thereby realizing a fast switching function. Furthermore, the strip-shaped port is configured to be arc-shaped, and the center of the circle of the strip-shaped port and the rotation axis of the valve core 30 are located on the same side of the strip-shaped port, and the distance between two ends of the strip-shaped port in the circumferential direction is greater than the minimum distance between two adjacent communication ports 23 of the plurality of communication ports 23 in the circumferential direction. By means of this configuration, the strip-shaped port is closer to the rotation axis of the valve core 30, thereby being beneficial to saving space, realizing miniaturization of the multi-way valve, and making the layout of the whole pipes of an air conditioning system more rational. Moreover, the distance between two ends of the strip-shaped port in the circumferential direction is greater than the minimum distance between two adjacent communication ports 23 of the plurality of communication ports 23 in the circumferential direction; this configuration can ensure that the second end of the flow-through channel 31 can be in communication with at least one communication port 23 during rotation and shifting of the valve core 30, which can avoid sudden increase or decrease of the system pressure during switching which would otherwise cause shut down of the system due to false determination. In order to further improve the smooth flow of fluid, the plurality of communication port 23 can be configured to have a shape matching the shape of the second end of the flow-through channel 31.

As shown in Fig. 1 and Fig. 2, in some embodiments of the present invention, the valve core 30 has a first end and a second end arranged opposite each other along an axis, a first bearing 34 is provided between the first end of the valve core 30 and the valve body 20, and a second bearing 35 is provided between the second end of the valve core 30 and the valve body 20. The provision of the first bearing 34 and the second bearing 35 effectively reduces a friction load between the valve core 30 and the valve body 20, and reduces an action torque during switching, realizing a fast reversing function of the multi-way valve under high differential pressure. Since the valve core 30 is subject to force of refrigerant fluid in the axial direction, in some embodiments, the first bearing 34 and the second bearing 35 are a thrust ball bearing or an angular contact bearing, so that the valve core 30 is more stable during rotation, avoiding shaking of the valve core 30.

As shown in Fig. 3, in some embodiments of the present invention, a first shaft shoulder 38 and a second shaft shoulder 39 are provided on the valve core 30; both the first bearing 34 and the second bearing 35 are sleeved on the valve core 30; the first shaft shoulder 38 is fitted to an end face of an inner ring of the first bearing 34 for position limiting, and the second shaft shoulder 39 is fitted to an end face of an inner ring of the second bearing 35 for position limiting; both an outer ring of the first bearing 34 and an outer ring of the second bearing 35 are fitted to the valve body 20 for position limiting; there is a first clearance L1 in the axial direction between the first shaft shoulder 38 and the first bearing 34, and there is a second clearance L2 in the axial direction between the slider 41 and an end face of the valve body 30 facing the communication ports 23, wherein L1<L2. By means of this design, if the valve core 30 moves axially upward to be in contact with the first bearing 34, the slider 41 is still spaced apart from the end face of the valve core 30 facing the plurality of communication ports 23, preventing the lower end face of the slider 41 from tightly abutting against the valve core 30; moreover, the axial force applied to the valve core 30 can be absorbed by the first bearing 34, and would not be applied on the slider 41.

**In** addition, in this embodiment, when the slider 41 is subjected only to the gravity and elastic force, a bottom of the slider 41 and the end face of the valve element 30 facing the plurality of communication ports 23 have a minimum distance, and the minimum distance is set to be greater than 0.1 mm. By means of this configuration, a sufficient space is provided between the bottom of the slider 41 and the end face of the valve core 30, such that high-temperature high-pressure refrigerant fluid can be located at the bottom of the slider 41 when passing through the slider 41, and applies an upward acting force to the slider 41, so as to further ensure that a top of the slider 41 is fitted with the surface where the plurality of communication ports 23 are located, avoiding leakage of the refrigerant fluid. In some embodiments, the minimum distance can be 0.1 mm, 0.2 mm, or 0.3 mm.

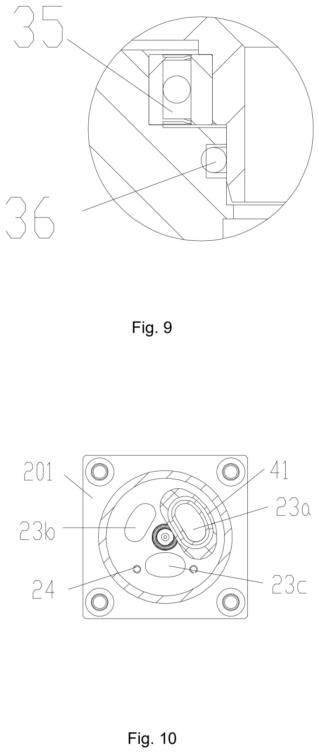

As shown in Fig. 1 and Fig. 9, in some embodiments of the present invention, the first end of the flow-through channel 31 is provided on the end face of the second end of the valve core 30, the second end of the valve core 30 passes into the inlet/outlet port 22, a second sealing gasket 36 is provided between the second end of the valve core 30 and a lateral wall of the inlet/outlet port 22, and the second sealing gasket 36 is located on a side of the second bearing 35 away from the plurality of communication ports 23. According to this design, when high-temperature high-pressure refrigerant fluid flows in the flow-through channel 31 and low-temperature low-pressure refrigerant fluid flows in the communication cavity 21, the second sealing gasket 36 isolates a gap between the second end of the valve core 30 and the end cap 202, thereby ensuring that the second bearing 35 is always located in a low temperature environment, preventing the second bearing 35 from expanding due to high temperature and preventing volatilization of lubricating oil inside the second bearing 35, thereby prolonging the service life of the second bearing 35, improving the reliability of the overall system.

Furthermore, an inner wall of the inlet/outlet port 22 is provided with a second annular limiting groove; the second sealing gasket 36 is sleeved on the second end of the valve core 30 and is located in the second annular limiting groove; the second annular limiting groove is used for accommodating the second sealing gasket 36; when the multi-valve is assembled, a pre-tightening force can be applied to the second sealing gasket 36 to cause the second sealing gasket 36 to deform in the second annular limiting groove, increasing a sealing area, and further improving the sealing performance of the second sealing gasket 36.

In an embodiment of the present invention, the multi-way valve further includes a sealing ring, a sealing area of the second sealing gasket 36 located between the slider 41 and the valve core 30 is S3, and a sealing area of the sealing ring is S4; when a low-pressure refrigerant flows in the flow-through channel 31 and a high-pressure refrigerant flows in the communication cavity 21, S3≥S4; and when a high-pressure refrigerant flows in the flow-through channel 31 and a low-pressure refrigerant flows in the communication cavity 21, S3≤S4. In some embodiments, the sealing area S3 is an acting area of differential pressure force applied to the valve core 30 at the second sealing gasket 36; and the sealing area S4 is an acting area of differential pressure force applied to the valve core 30 at the sealing ring. By means of this configuration, a force applied to the valve core 30 in a direction towards the valve seat 201 is smaller than a force applied to the valve core 30 in a direction towards the inlet/outlet port 22, so that the valve core 30 abuts against the second bearing 35 as far as possible, preventing the valve core 30 from pushing the slider 41 to press the valve seat 201, reducing the torque applied to the valve core 30, and improving the smooth rotation of the valve core 30. The second sealing gasket 36 is provided in a groove formed by the end cover 202, the sealing ring is provided between the slider 41 and the valve core 30, and the sealing areas S3 and S4 are calculated by means of an inner diameter of the second sealing gasket 36 and an inner diameter of the sealing ring, respectively. When a low-pressure refrigerant flows in the flow-through channel 31 and a high-pressure refrigerant flows in the communication cavity 21, the sealing ring is sleeved on the mounting boss 32 and is located between the slider 41 and the mounting boss 32; and when a high-pressure refrigerant flows in the flow-through channel 31 and a low-pressure refrigerant flows in the communication cavity 21, the sealing ring is sleeved on the slider 41 and is located between the slider 41 and a mounting recess 33.

As shown in Fig. 1 and Fig. 6, in some embodiments of the present invention, the motor assembly 10 is provided with a balancing cavity 13, one end of the balancing cavity 13 being provided on the driving end and passing through; the valve core 30 has a connecting end, the driving end being provided on the valve body 20 and passing through and being in driving connection with the connecting end; and the valve core 30 is provided with a balancing channel 37, one end of the balancing channel 37 being in communication with the flow-through channel 31, and the other end of the balancing channel 37 being provided on an end face of the connecting end and passing through and being in communication with the balancing cavity 13. According to this configuration, a provision of the balancing channel 37 can balance a pressure difference between the connecting end of the valve core 30 and the driving end, so that the valve core 30 can rotate stably. Furthermore, when low-temperature low-pressure refrigerant fluid flows in the flow-through channel 31, and high-temperature high-pressure refrigerant fluid flows in the communication cavity 21, the low-temperature low-pressure refrigerant fluid would enter the balancing channel 37; moreover, the balancing cavity 13 is provided inside the driving motor 11 and the speed reducer 12, and the balancing channel 37 is in communication with the balancing cavity 13, such that the low-temperature low-pressure refrigerant fluid inside the valve core 30 can flow into the motor assembly 10 to cool the motor assembly 10, reducing a magnetic loss of the motor assembly 10, and prolonging the service life of the motor assembly 10. In some embodiments, the motor assembly 10 includes a housing, a driving motor 11, a speed reducer 12, and a connecting shaft. The housing is provided with the balancing cavity 13, the driving motor 11 is arranged in the balancing cavity 13, the speed reducer 12 is arranged in the balancing cavity 13, the driving motor 11 is in drive connection with an input end of the speed reducer 12, one end of the connecting shaft is in driving connection with an output end of the speed reducer 12, the other end of the connecting shaft is in driving connection with the first end of the valve core 30, and the balancing cavity 13 passes through the connecting shaft and is in communication with the balancing channel 37.

In some embodiments, the valve body 20 is provided with a mounting hole 26 which is located at the end of the valve body where the plurality of communication ports 23 are located; one end of the mounting hole 26 is in communication with the communication cavity 21, and the other end of the mounting hole 26 is in communication with an outside; the valve core 30 has a first end and a second end arranged opposite each other along the axis; both the first end of the valve core 30 and the driving end passes into the mounting hole 26; and the balancing channel 37 passes through the first end of the valve core 30 and is in communication with the balancing cavity 13. By means of this configuration, the driving end of the motor assembly 10 passes into the mounting hole 26 and is connected to the first end of the valve core 30 which also passes into the mounting hole 26; the mounting hole 26 is used for accommodating the driving end and the first end of the valve core 30; and the driving end of the motor assembly 10 drives the valve core 30 to rotate so as to switch refrigerant fluid flow passages, realizing the switching between cooling and heating modes.

According to the technical solution of the present invention, the multi-way valve further includes a first sealing gasket 25 which is sleeved on the first end of the valve core 30 and is located in the mounting hole 26. A provision of the first sealing gasket 25 can provide sealing between the communication cavity 21 and the mounting hole 26, preventing high-temperature high-pressure fluid from entering the interior of the motor assembly 10 from the communication cavity 21 via the mounting hole 26 which would otherwise cause excessively high temperature of the motor assembly 10 and a shortened service life of the motor assembly 10, and reducing leakage of refrigerant fluid to the outside, improving the sealing performance of the multi-way valve. In some embodiments, the first sealing gasket 25 is sleeved on the first end of the valve core 30, a sealing groove is provided at the first end of the valve core 30, and the first sealing gasket 25 is sleeved in the sealing groove to provide sealing between the communication cavity 21 and the mounting hole 26; and oppositely, the sealing groove may also be provided on an inner wall of the mounting hole 26, and the first sealing gasket 25 is embedded in the sealing groove to provide sealing between the communication cavity 21 and the mounting hole 26.

In some embodiments of the present invention, an annular limiting groove is provided on a lateral wall of the first end of the valve core 30, and is arranged away from the driving end; the first sealing gasket 25 is located in the first annular limiting groove, an outer wall of the first sealing gasket 25 is matched with the inner wall of the mounting hole 26 for sealing, and an inner wall of the first sealing gasket 25 is matched with a radially arranged groove bottom of the first annular limiting groove for sealing. By means of this configuration, the sealing performance of the valve core 30 against the outside can be improved; in addition, the first sealing gasket 25 is mounted inside the first annular limiting groove arranged on the valve core 30, and the first sealing gasket 25 can be taken out from the mounting hole 26 along with the detachment of the valve core 30, facilitating a replacement of the first sealing gasket 25. Moreover, the first sealing gasket 25 and the valve core 30 are made of different materials and have different thermal conductivity coefficients, thus heat would pass through two different materials when transferred, so that the efficiency of heat transferring along the valve core 30 can be reduced, further reducing the influence of high-temperature refrigerant fluid on the motor assembly 10, further prolonging the service life of the motor assembly 10.

In another embodiment of the present invention, the multi-way valve further includes a second sealing ring 43b which is located between the slider 41 and the valve core 30; a sealing area of the second sealing ring 43b is S4, a sealing area of the second sealing gasket 36 is S3, and a sealing area of the first sealing gasket 25 is S5; and when a low-pressure refrigerant flows in the flow-through channel 31 and a high-pressure refrigerant flows in the communication cavity 21, S3≥S4+S5. In some embodiments, the sealing area S5 is an acting area of differential pressure force applied to the valve core 30 at the first sealing gasket 25. By means of this configuration, the force applied to the valve core 30 in the direction towards the valve seat 201 is smaller than the force applied to the valve core 30 in the direction towards the inlet/outlet port 22, so that the valve core 30 abuts against the second bearing 35 as far as possible, preventing the valve core 30 from pushing the slider 41 to press the valve seat 201, reducing the torque applied to the valve core 30, and improving the smooth rotation of the valve core 30. When the sealing groove is provided at the first end of the valve core 30, the sealing area S5 is calculated from an outer diameter of the first sealing gasket 25; and when the sealing groove is provided on the inner wall of the mounting hole 26, the sealing area S5 is calculated from an inner diameter of the first sealing gasket 25.

In the present embodiment, the multi-way valve is provided with three communication ports, in an embodiment, a first communication port 23a, a second communication port 23b, and a third communication port 23c are provided. The valve body 20 is provided with a first refrigerant passage, a second refrigerant passage, and a third refrigerant passage; one end of the first refrigerant passage is located on a lateral wall of the valve body 20, and the other end of the first refrigerant passage forms the first communication port 23a; and one end of the second refrigerant passage and one end of the third refrigerant passage are both arranged on the lateral wall of the valve body 20, the other end of the second refrigerant passage forms the second communication port 23b, and the other end of the third refrigerant passage forms the third communication port 23c.

In this embodiment, a limiting structure is provided between the valve body 20 and the valve core 30, which can limit the rotation angle of the valve core 30 and prevent excessive rotation of the valve core 30 during rotation which would otherwise cause incorrect fitting between the flow-through hole 41a and the communication hole and cause refrigerant leakage resulted from a gap generated; and a provision of the limiting structure can ensure that the valve core 30 shifts in place, further reducing a risk of refrigerant leakage.

The multi-way valve may be in communication with different pipes; in some embodiments, a low-temperature low-pressure refrigerant may be introduced into the flow-through channel 31 and the inlet/outlet port 22, and a high-temperature high-pressure refrigerant may be introduced into the communication cavity 21; and a high-temperature high-pressure refrigerant may be introduced into the flow-through channel 31 and the inlet/outlet port 22, and a low-temperature low-pressure refrigerant may be introduced into the communication cavity 21.

In an embodiments provided in the present invention, the flow-through channel 31 and the inlet/outlet port 22 are fitted to form a low-temperature low-pressure refrigerant passage, and the communication cavity 21 forms a high-temperature high-pressure refrigerant passage. When the refrigerant fluid in the communication cavity 21 is in a high-temperature high-pressure state, the slider 41 and the valve core 30 can be closely fitted by means of the sealing ring by means of the pressure of the refrigerant, preventing leakage of the refrigerant fluid from between the slider 41 and the valve core 30, thereby improving a stability of an inner flow path of the multi-way valve.

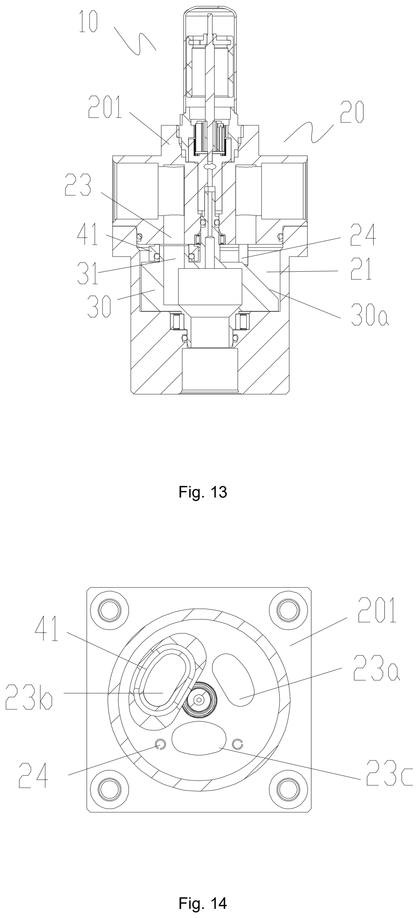

A specific process in which the multi-way valve performs switching is as follows: as shown in Fig. 10, the second end of the flow-through channel 31 is in communication with the first communication port 23a, the first communication port 23a is in communication with the inlet/outlet port 22 via the communication channel 31, and the second communication port 23b is in communication with the third communication port 23c via the communication cavity 21; a low-temperature low-pressure refrigerant is introduced into the flow-through channel 31, the inlet/outlet port 22 is a low-pressure outlet, and the first communication port 22a is a low-pressure inlet; a high-temperature high-pressure refrigerant is introduced into the communication cavity 21, the second communication port 23b is a high-pressure outlet, and the third communication port 23c is a high-pressure inlet; the driving motor 11 drives, by means of the speed reducer 12, the valve core 30 to rotate counterclockwise, and at this time, the state shown in Fig. 11 and Fig. 12 is achieved, that is, the second end of the flow-through channel 31 can be in communication with both the first communication port 23a and the second communication port 23b; the rotation of the valve core 30 is continued, and as shown in Fig. 13 and Fig. 14, the second end of the flow-through channel 31 is in communication with the second communication port 23b, and at this time, the second communication port 23b is in communication with the inlet/outlet port 22 via the communication channel 31, and the first communication port 23a is in communication with the third communication port 23c via the communication cavity 21; and at this time, the inlet/outlet port 22 is a low-pressure outlet, the second communication port 23b is a low-pressure inlet, the first communication port 23a is a high-pressure outlet, and the third communication port 23c is a high-pressure inlet, thus achieving reversing of the valve body.

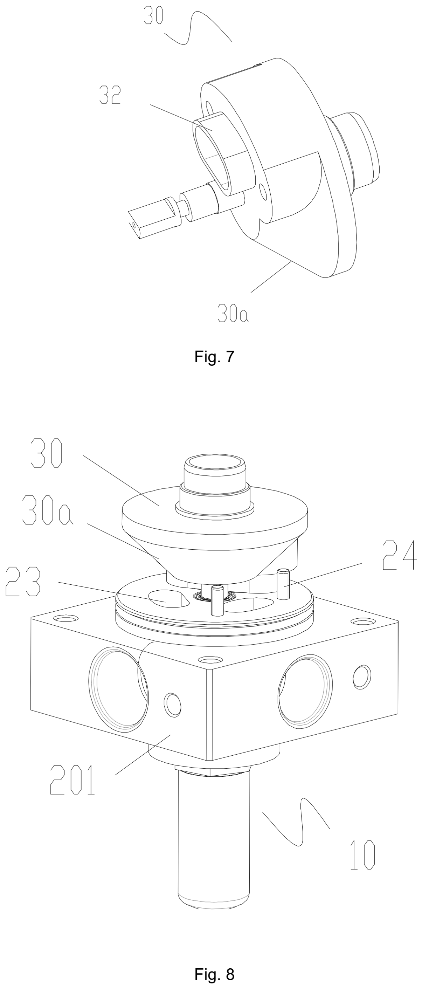

With reference to Fig. 8 and Fig. 10, the limiting structure includes limiting posts 24 which are arranged on two sides of the third communication port 23c; and the limiting posts 24 cooperate with the valve core 30 to limit the rotation of the valve core 30 between the first communication port 23a and the second communication port 23b, thereby realizing switching between the first communication port 23a and the second communication port 23b. The flow-through hole 41a communicates with one of the first communication port 23a and the second communication port 23b to form a low-pressure refrigerant flow-through channel, and the third communication port 23c communicates with the other of the first communication port 23a and the second communication port 23b via the communication cavity 21 to form a high-pressure refrigerant flow-through channel.

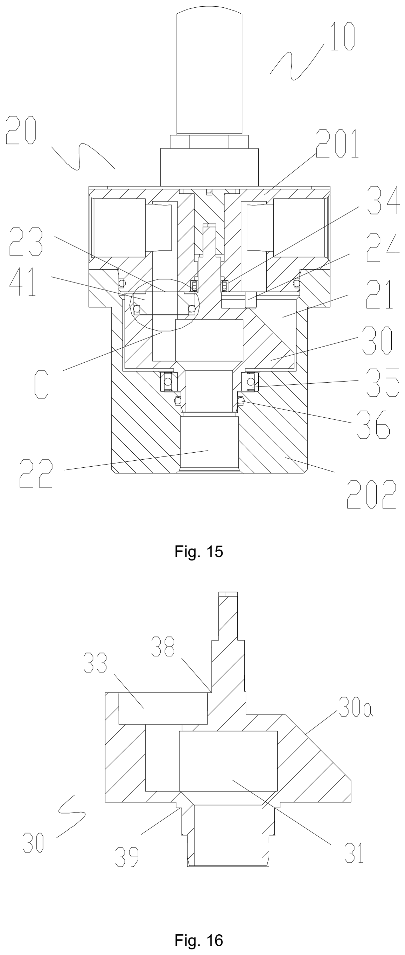

As shown in Fig. 15 to Fig. 18, embodiment 2 of the present invention provides a multi-way valve, which differs from embodiment 1 mainly in respect of the valve core 30. In an embodiment, when a high-pressure refrigerant flows in the flow-through channel 31 and a low-pressure refrigerant flows in the communication cavity 21, the end face of the valve core 30 where the second end of the flow-through channel 31 is located is provided with a mounting recess 33; the mounting recess 33 is in communication with the second end of the flow-through channel 31, a part of the slider 41 is located in the mounting recess 33, the elastic member 42 is located at a bottom of the mounting recess 33 and is connected to the slider 41, and the slider 41 can move along the axis of the mounting recess 33.

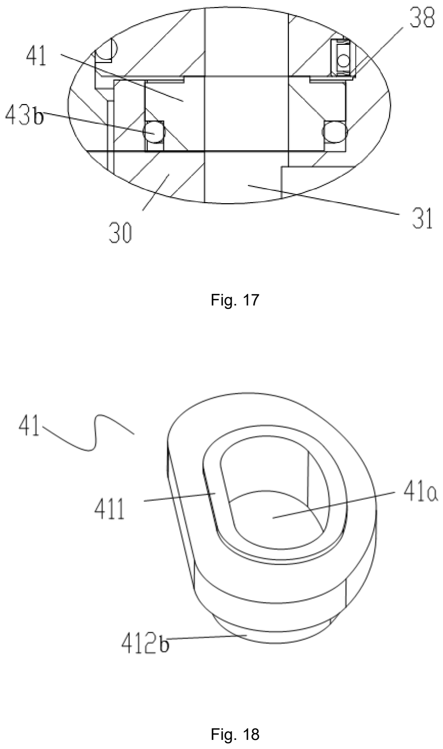

As shown in Fig. 18, in this embodiment, the second sealing ring groove 412b is provided on an outer wall of the slider 41; and when the second sealing ring 43b is assembled, an inner ring of the second sealing ring 43b is matched with a lateral wall of the second sealing ring groove 412b for sealing, and an outer ring of the second sealing ring 43b is matched with an inner wall of the mounting recess 33 for sealing.

According to embodiment 2 provided by the present invention, the flow-through channel 31 and the inlet/outlet port 22 are fitted to form a high-temperature high-pressure refrigerant passage, and the communication cavity 21 forms a low-temperature low-pressure refrigerant passage. When the refrigerant fluid in the flow-through channel 31 is in a high-temperature high-pressure state, the slider 41 and the valve core 30 can be closely fitted by means of the second sealing ring 43b by means of the pressure of the refrigerant, preventing leakage of the refrigerant fluid from between the slider 41 and the valve core 30, thereby improving a stability of an internal flow path of the multi-way valve. Referring to Fig. 10, the inlet/outlet port 22 is a high-pressure inlet, the first communication port 23a is a high-pressure outlet, the third communication port 23c is a low-pressure outlet, and the second communication port 23b is a low-pressure inlet. After the multi-way valve performs switching, referring to Fig. 14, the inlet/outlet port 22 is a high-pressure inlet, the second communication port 23b is a high-pressure outlet, the third communication port 23c is a low-pressure outlet, and the first communication port 23a is a low-pressure inlet.

Further, a distance between the slider 41 and the bottom of the mounting recess 33 is greater than or equal to 0.1 mm. By means of this configuration, a sufficient space is provided between the bottom of the slider 41 and the end face of the valve core 30, such that high-pressure refrigerant fluid can pass through the bottom of the mounting recess 33 via the bottom of the slider 41, and applies upward acting force to the slider 41, so as to further ensure that the top of the slider 41 is fitted with the surface where the plurality of communication ports 23 are located, avoiding leakage of the refrigerant fluid. In some embodiments, the minimum distance can be 0.1 mm, 0.2 mm, or 0.3 mm.

In embodiment 2 of the present invention, the multi-way valve further includes a second sealing ring 43b which is sleeved on the slider 41 and is located between the slider and the mounting recess 33. By means of this configuration, leakage of refrigerant fluid from between the slider 41 and the valve core 30 is prevented, thereby improving the stability of an internal flow path of the multi-way valve.

As shown in Fig. 17 and Fig. 18, according to embodiment 2 provided by the present invention, the outer wall of the slider 41 is provided with a second sealing ring groove 412b, the second sealing ring 43b is sleeved on the slider 41 and is located between the slider 41 and the mounting recess 33, and is located in the second sealing ring groove 412b, the inner ring of the second sealing ring 43b is matched with the lateral wall of the second sealing ring groove 412b to perform sealing, and the outer ring of the second sealing ring 43b is matched with the inner wall of the mounting recess 33 to perform sealing. By means of this configuration, when the refrigerant fluid in the flow-through channel 31 is in a high-pressure state, the slider 41 and the valve core 30 can be closely fitted by means of the second sealing ring 43b by means of the pressure of the refrigerant, preventing leakage of the refrigerant fluid from between the slider 41 and the valve core 30, further improving the stability of an internal flow path of the multi-way valve.

It should be noted that the terms used herein are for the purpose of describing particular embodiments only and are not intended to be limiting of exemplary embodiments in accordance with the present invention. As used herein, the singular form is intended to include the plural form as well, unless the context clearly indicates, and further it should be understood that the terms "includes" and/or "including" when used in this description, specify the presence of features, steps, operations, devices, components, and/or combinations thereof.

The relative arrangements of components and steps, numerical expressions and numerical values set forth in these embodiments do not limit the scope of the present invention, unless being additionally specifically construed. Moreover, it should be understood that, for the convenience of description, the dimensions of the parts shown in the drawings are not drawn according to the actual proportional relationship. Techniques, methods, and devices known to a person skilled in the relevant art may not be discussed in detail, but should be considered, where appropriate, a part of the description. In all examples shown and discussed herein, any specific values should be construed as exemplary only and not as limiting. Therefore, other examples of the exemplary embodiments may have different values. It should be noted that similar signs and letters represent similar item in the following drawings, and thus, once an item is defined in one figure, it needs not be further discussed in subsequent figures.

In the description of the present invention, it should be understood that orientation or position relationships indicated by orientation words such as "front, back, up, down, left, right", "transverse, longitudinal, vertical, horizontal", and "top, bottom" are generally based on the orientation or position relationships shown in the drawings. These orientation words are merely used to facilitate the description of the present invention and simplify the description, and do not indicate and imply that the device or element referred to must have a particular orientation or be constructed and operated in a particular orientation, unless specified to the contrary, and thus cannot be understood as limit to the scope of protection of the present invention. The orientation terms "inner, outer" refer to the inside and outside with respect to the contour of each component itself.

For easy description, spatially relative terms, such as "over...", "above...", "on the upper surface of...", and "upper" may be used herein for describing spatial positional relationships of one device or feature with other devices or features as illustrated in the drawings. It should be understood that the spatially relative terms are intended to encompass different orientations in use or operation in addition to the orientation of the device depicted in the drawings. For example, if the device in the drawings are inverted, the device described as "above other devices or structures" or "over other devices or structures" would then be oriented as "below other devices or structures" or "under other devices or structures". Accordingly, the exemplary term "above..." may encompass both an orientation of "above..." and an orientation of "below...". The device may be positioned in various other ways as well (rotated 90 degrees or at other orientations), and the spatial relativity descriptions used herein are to be construed accordingly.

In addition, it should be noted that, using terms such as "first" and "second" to define parts is only for the convenience of distinguishing corresponding parts, and if no other statement is made, these terms do not have a special meaning, and thus cannot be construed as limiting the scope of protection of the present invention.

The above is only preferred embodiments of the present invention and is not intended to limit the present invention. A person skilled in the art may make various modifications and variations. Any modifications, equivalent replacements, improvements, etc. made within the spirit and principle of the present invention shall all fall within the scope of protection of the present invention.

## Claims

1. A multi-way valve, wherein the multi-way valve comprises:
a motor assembly (10), having a driving end;
a valve body (20), provided with a communication cavity (21), an inlet/outlet port (22), and a plurality of communication ports (23), the plurality of communication ports (23) are annularly arranged at intervals on the valve body (20) and are all in communication with the communication cavity (21), and the inlet/outlet port (22) is in communication with the communication cavity (21); and
a valve core (30), rotatably provided in the communication cavity (21), wherein a center around which the plurality of communication ports (23) are arranged is on a rotation axis of the valve core (30), the valve core (30) is provided with a flow-through channel (31), a first end of the flow-through channel (31) being located on the rotation axis of the valve core (30) and being in communication with the inlet/outlet port (22), a second end of the flow-through channel (31) being selectively in communication with one communication port (23) of the plurality of communication ports (23), the driving end is in driving connection with the valve core (30), wherein the motor assembly (10) is able to drive the valve core (30) to rotate in the communication cavity (21).

2. The multi-way valve of claim 1, wherein the multi-way valve further comprises:
a sealing assembly, provided between the second end of the flow-through channel (31) and the valve body (20), and being capable of forming sealing between the second end of the flow-through channel (31) and one corresponding communication port (23) of the plurality of communication ports (23).

3. The multi-way valve according to claim 2, wherein the plurality of communication ports (23) are coplanar, an end face of the valve core (30) where the second end of the flow-through channel (31) is located is arranged corresponding to a surface where the communication ports (23) are located, and the sealing assembly comprises:
a slider (41), movably provided on the valve core (30), wherein the slider (41) is located at the second end of the flow-through channel (31), and is provided with a flow-through hole (41a), one end of the flow-through hole (41a) being in communication with the second end of the flow-through channel (31), and the other end of the flow-through hole (41a) abutting against the surface where the plurality of communication ports (23) are located, and the plurality of communication ports (23) are in communication with the flow-through channel (31) via the flow-through hole (41a).

4. The multi-way valve according to claim 3, wherein the flow-through channel (31) is used to circulate low-pressure refrigerant and the communication cavity (21) is used to circulate high-pressure refrigerant, a mounting boss (32) is provided on the end face of the valve core (30) where the second end of the flow-through channel (31) is located, the mounting boss (32) surrounds a periphery of the second end of the flow-through channel (31), the slider (41) is sleeved on a periphery of the mounting boss (32), and the slider (41) can move in an axial direction of the mounting boss (32).

5. The multi-way valve according to claim 4, wherein the multi-way valve further comprises a first sealing ring (43a) which is sleeved on the mounting boss (32) and is located between the slider (41) and the mounting boss (32).

6. The multi-way valve according to claim 5, wherein a first sealing ring groove (412a) is provided on an inner wall of the slider (41), the first sealing ring groove (412a) is located at an end of the slider (41) away from the plurality of communication ports (23), and the first sealing ring (43a) is located in the first sealing ring groove (412a).

7. The multi-way valve according to claim 3, wherein the flow-through channel (31) is used to circulate high-pressure refrigerant and the communication cavity (21) is used to circulate low-pressure refrigerant, the end face of the valve core (30) where the second end of the flow-through channel (31) is located is provided with a mounting recess (33), the mounting recess (33) is in communication with the second end of the flow-through channel (31), a part of the slider (41) is located in the mounting recess (33), and the slider (41) can move in an axial direction of the mounting recess (33).

8. The multi-way valve according to claim 7, wherein a distance between the slider (41) and a bottom of the mounting recess (33) is greater than or equal to 0.1 mm.

9. The multi-way valve according to claim 7, wherein the multi-way valve further comprises a second sealing ring (43b) which is sleeved on the slider (41) and is located between the slider (41) and the mounting recess (33).

10. The multi-way valve according to claim 9, wherein an outer wall of the slider (41) is provided with a second sealing ring groove (412b), the second sealing ring (43b) is located in the second sealing ring groove (412b), an inner ring of the second sealing ring (43b) is matched with a lateral wall of the second sealing ring groove (412b) for sealing, and an outer ring of the second sealing ring (43b) is matched with an inner wall of the mounting recess (33) for sealing.

11. The multi-way valve according to claim 3, wherein an end face of the slider (41) close to the communication ports (23) is provided with an annular boss (411), and the annular boss (411) surrounds a periphery of the flow-through hole (41a) and abuts against a surface where the communication ports (23) are located.

12. The multi-way valve according to claim 7, wherein an end face of the slider (41) close to the communication ports (23) is provided with an annular boss (411), and the annular boss (411) surrounds a periphery of the flow-through hole (41a) and abuts against a surface where the communication ports (23) are located; and
an area of an end face of the annular boss (411) that faces the plurality of communication ports (23) is S2, and an area of an end face of the slider (41) that is located outside the annular boss (411) and faces the communication ports (23) is S1, wherein 1≤S1/S2≤6.

13. The multi-way valve according to claim 4, wherein an end face of the slider (41) close to the communication ports (23) is provided with an annular boss (411), and the annular boss (411) surrounds a periphery of the flow-through hole (41a) and abuts against a surface where the communication ports (23) are located; and
a difference between an area surrounded by an outer contour of the annular boss (411) and an area surrounded by an inner contour of the flow-through hole (41a) is S6, and a difference between the area surrounded by the outer contour of the annular boss (411) and an area surrounded by an inner contour of the annular boss (411) is S7, wherein 1≤S6/S7≤6.

14. The multi-way valve according to claim 11, wherein a port of the annular boss (411) is a strip-shaped port, and the strip-shaped port is arc-shaped, and a center of a circle of the strip-shaped port and the rotation axis of the valve core (30) are located on a same side of the strip-shaped port.

15. The multi-way valve according to claim 14, wherein a contour of each of the communication ports (23) matches a contour of the strip-shaped port, and a circumferential contour of a lateral wall of the slider (41) matches the contour of the strip-shaped port.

16. The multi-way valve according to claim 1, wherein a port of the second end of the flow-through channel (31) is a strip-shaped port, the strip-shaped port is arc-shaped, a center of a circle of the strip-shaped port and the rotation axis of the valve core (30) are located on a same side of the strip-shaped port, and a distance between two ends of the strip-shaped port in a circumferential direction is greater than a minimum distance between two adjacent communication ports (23) of the plurality of communication ports (23) in a circumferential direction.

17. The multi-way valve according to claim 1, wherein the communication cavity (21) has a top surface and a bottom surface arranged opposite each other, the plurality of communication ports (23) are located on the top surface, the inlet/outlet port (22) is located on the bottom surface, a flow guide inclined surface (30a) is provided on a lateral wall of the valve core (30) and is configured to face the communication ports (23), and a distance between the flow guide inclined surface (30a) and an axis of the valve core (30) gradually increases in a direction from the communication ports (23) to the inlet/outlet port (22).

18. The multi-way valve according to claim 3, wherein the valve core (30) has a first end and a second end arranged opposite each other along an axis, a first bearing (34) is provided between the first end of the valve core (30) and the valve body (20), and a second bearing (35) is provided between the second end of the valve core (30) and the valve body (20).

19. The multi-way valve of claim 18, wherein
a first shaft shoulder (38) and a second shaft shoulder (39) are provided on the valve core (30), and both the first bearing (34) and the second bearing (35) are sleeved on the valve core (30); the first shaft shoulder (38) is fitted to an end face of an inner ring of the first bearing (34) for position limiting, the second shaft shoulder (39) is fitted to an end face of an inner ring of the second bearing (35) for position limiting, and both an outer ring of the first bearing (34) and an outer ring of the second bearing (35) are fitted to the valve body (20) for position limiting; there is a first clearance L1 in the axial direction between the first shaft shoulder (38) and the first bearing (34), and there is a second clearance L2 in the axial direction between the slider (41) and an end face of the valve core (30) facing the communication ports (23), wherein L1<L2.

20. The multi-way valve according to claim 18, wherein the first end of the flow-through channel (31) is provided on an end face of the second end of the valve core (30), the second end of the valve core (30) passes into the inlet/outlet port (22), a second sealing gasket (36) is provided between the second end of the valve core (30) and a lateral wall of the inlet/outlet port (22), and the second sealing gasket (36) is located on a side of the second bearing (35) away from the communication ports (23).

21. The multi-way valve according to claim 20, wherein an inner wall of the inlet/outlet port (22) is provided with a second annular limiting groove, and the second sealing gasket (36) is sleeved on the second end of the valve core (30) and is located in the second annular limiting groove.

22. The multi-way valve according to claim 3, wherein the valve core (30) has a first end and a second end arranged opposite each other along an axis, the first end of the flow-through channel (31) is arranged on an end face of the second end of the valve core (30), the second end of the valve core (30) passes into the inlet/outlet port (22), and a second sealing gasket (36) is provided between the second end of the valve core (30) and a lateral wall of the inlet/outlet port (22);
the multi-way valve further comprises a sealing ring which is located between the slider (41) and the valve core (30), a sealing area of the second sealing gasket (36) is S3, a sealing area of the sealing ring is S4; and
when a low-pressure refrigerant flows in the flow-through channel (31) and a high-pressure refrigerant flows in the communication cavity (21), S3≥S4; and when a high-pressure refrigerant flows in the flow-through channel (31) and a low-pressure refrigerant flows in the communication cavity (21), S3≤S4.

23. The multi-way valve according to claim 20, wherein a first sealing gasket (25) is provided between the first end of the valve core (30) and the valve body (20), a mounting hole (26) is provided on the valve body (20), the mounting hole (26) is located at an end of the valve body (20) where the communication ports (23) are located, one end of the mounting hole (26) is in communication with the communication cavity (21), the other end of the mounting hole (26) is in communication with an outside, and the first sealing gasket (25) is located in the mounting hole (26).

24. The multi-way valve according to claim 23, wherein a first annular limiting groove is provided on a lateral wall of the first end of the valve core (30), and is arranged away from the driving end, the first sealing gasket (25) is located in the first annular limiting groove, an outer wall of the first sealing gasket (25) is matched with an inner wall of the mounting hole for sealing, and an inner wall of the first sealing gasket (25) is matched with a radially arranged groove bottom of the first annular limiting groove for sealing.

25. The multi-way valve according to claim 23, wherein the multi-way valve further comprises a second sealing ring (43b) which is located between the slider (41) and the valve core (30), a sealing area of the second sealing ring (43b) is S4, a sealing area of the second sealing gasket (36) is S3, and a sealing area of the first sealing gasket (25) is S5;
when a low-pressure refrigerant flows in the flow-through channel (31) and a high-pressure refrigerant flows in the communication cavity (21), S3≥S4+S5.

26. The multi-way valve according to claim 1, wherein the motor assembly (10) is provided with a balancing cavity (13), the valve core (30) is provided with a balancing channel (37), one end of the balancing channel (37) is in communication with the flow-through channel (31), and the other end of the balancing channel (37) is in communication with the balancing cavity (13).

27. The multi-way valve according to claim 26, wherein the valve body (20) is provided with a mounting hole (26) which is located at an end of the valve body where the communication ports (23) are located, one end of the mounting hole (26) is in communication with the communication cavity (21), the other end of the mounting hole (26) is in communication with an outside, the valve core (30) has a first end and a second end arranged opposite each other along an axis, both the first end of the valve core (30) and the driving end pass into the mounting hole (26), and the balancing channel (37) passes through the first end of the valve core (30) and is in communication with the balancing cavity (13).

28. The multi-way valve according to claim 3, wherein a limiting structure is provided between the valve body (20) and the valve core (30), and the limiting structure can limit a rotation angle of the valve core (30).

29. The multi-way valve according to claim 28, wherein the multi-way valve comprises a first communication port (23a), a second communication port (23b), and a third communication port (23c) which are sequentially provided; the limiting structure comprises limiting posts (24) which are arranged on two sides of the third communication port (23c), the limiting posts (24) cooperate with the valve core (30) to limit a rotation of the valve core (30) between the first communication port (23a) and the second communication port (23b); the flow-through hole (41a) is in communication with one of the first communication port (23a) and the second communication port (23b), and the third communication port (23c) is in communication with the other of the first communication port (23a) and the second communication port (23b) via the communication cavity (21).

30. The multi-way valve of claim 26, wherein the motor assembly (10) comprises:
a housing, provided with the balancing cavity (13);
a driving motor (11), provided in the balancing cavity (13);
a speed reducer (12), provided in the balancing cavity (13), the driving motor (11) being in drive connection with an input end of the speed reducer; and
a connecting shaft, one end of the connecting shaft being in drive connection with an output end of the speed reducer (12), the other end of the connecting shaft being in drive connection with a first end of the valve core (30), and the balancing cavity (13) passing through the connecting shaft and being in communication with the balancing channel (37).

31. The multi-way valve according to claim 1, wherein the valve body (20) comprises a valve seat (201) and an end cover (202), the plurality of communication ports (23) are annularly arranged at intervals on a flat surface of the valve seat (201) facing the valve core (30), the inlet/outlet port (22) is provided at an end of the end cover (202) away from the valve core (30), the valve seat (201) is detachably connected to the end cover (202), and the valve seat (201) and the end cover (202) are fitted to form the communication cavity (21).

32. The multi-way valve according to claim 3, wherein the multi-way valve further comprises an elastic member (42) which is arranged between the slider (41) and the valve core (30), the elastic member (42) being capable of providing elastic force to cause the slider (41) and the valve core (30) to draw away from each other.
